Europäisches Patentamt

European Patent Office

Office européen des brevets

(19)

(11) Veröffentlichungsnummer: **0 256 392**
**A1**

(12) **EUROPÄISCHE PATENTANMELDUNG**

(21) Anmeldenummer: **87111078.9**

(22) Anmeldetag: **30.07.87**

(51) Int. Cl.4: **G01L 1/22** , G01L 3/14 , G01L 5/16

(30) Priorität: **12.08.86 DE 3627382**

(43) Veröffentlichungstag der Anmeldung:
**24.02.88 Patentblatt 88/08**

(84) Benannte Vertragsstaaten:
**DE FR GB IT NL SE**

(71) Anmelder: **Siemens Aktiengesellschaft Berlin und München**
**Wittelsbacherplatz 2**
**D-8000 München 2(DE)**

(72) Erfinder: **Fritz, Harald, Dipl.-Ing. (FH)**
**Hebelstrasse 5**
**D-7517 Waldbronn 3(DE)**
Erfinder: **Wurll, Peter, Dipl.-Ing.**
**Kärcherstrasse 60**
**D-7500 Karlsruhe(DE)**

(54) **Messanordnung zum Erfassen von Kräften und Momenten.**

(57) Die Erfindung bezieht sich auf eine Meßanordnung zum Erfassen von Kräften und Momenten mit an Verformteilen einer Feder-/ bzw. Biegeanordnung angebrachten Dehnungsmeßstreifen (a, b, c, d, e, f, g, h), die bei einer Beaufschlagung der Verformteile mit Kräften (P1, P2, P3) oder Momenten (M2, M3) eine Dehnung oder Stauchung erfahren. Zur einfachen Erfassung von relativ kleinen Kräften und Momenten unabhängig vom Kraftangriffspunkt sind Blöcke (1, 6, 7) mit parallelogrammfederartigen Seitenteilen gebildet, die die Dehnungsmeßstreifen (a ... h) tragen. Die Blöcke sind in einer Reihenanordnung mit unterschiedlichen Ausrichtungen der auslenkbaren Parallelogrammfedern angeordnet.

Die Erfindung ist vor allem bei Handhabungsgeräten anwendbar.

FIG 3

Xerox Copy Centre

EP 0 256 392 A1

## Meßanordnung zum Erfassen von Kräften und Momenten

Die Erfindung bezieht sich auf eine Meßanordnung gemäß den Merkmalen des Oberbegriffs des Anspruchs 1.

Es ist bereits eine Kraft-und Momentenmeßanordnung mit Dehnungsmeßstreifen aus der DE-OS 34 06 059 bekannt, bei der auf einem rohrförmigen Meßkörper die Dehnungsmeßstreifen in vorgegebenem Winkel zueinander ausgerichtet angeordnet sind. Jeweils zwei Dehnungsmeßstreifen sind hier zu Halbbrücken in einer Meßanordnung zusammengeschaltet, so daß alle Längs-und Querkräfte sowie die Momente, die auf den Meßkörper einwirken, aufgrund einer Verformung von mindestens einem der Dehnungsmeßstreifen erfaßbar sind. Der zylindrische Meßkörper weist hier jedoch eine nicht unerhebliche Steifigkeit auf, so daß nur relativ große Kräfte und Momente erfaßt werden.

Der Erfindung liegt die Aufgabe zugrunde, eine Meßanordnung zur Erfassung von relativ kleinen Kräften und Momenten zu schaffen, die unabhängig vom Kraftangriffspunkt auf die Meßanordnung einwirken.

Zur Lösung dieser Aufgabe weist eine Meßanordnung der eingangs angegebenen Art die Merkmale des Kennzeichens des Anspruchs 1 auf. Gemäß der Erfindung wird in vorteilhafter Weise erreicht, daß durch die Ausbildung von Parallelogrammfedern eine ausgeprägte Verformung und somit eine hervorragende Detektion der Kräfte und Momente erlaubt wird. Die Komponenten der von dem Kraftangriffspunkt wirkenden Kräfte und/oder Momente werden auf relativ leicht verformbaren Parallelogrammfedern übertragen und hier jeweils von den angebrachten Dehnungsmeßstreifen detektiert. Die einzelnen Federpartien sind derart mit je zwei Dehnungsmeßstreifen versehen, daß sie jeweils nur für eine Kraftrichtung empfindlich, für die übrigen Kräfte aber unempfindlich sind. Dadurch wird die Auswertung der Messungen sehr einfach. Für eine Anwendung bei Robotersteuerungen muß beispielsweise eine beliebig im Raum wirkende Kraft, welche am Robotergreifer einwirkt, in drei in den Roboterkoordinaten liegende Teilkräfte zerlegt und gleichzeitig in diesen drei Werten angegeben werden. Hierzu können die jeweils auf den Federpartien angebrachten Dehnungsmeßstreifen zu Halbbrücken in einer Brückenschaltung zusammengeschaltet werden und die Diagonalspannung als Meßgröße ausgewertet werden.

Die Anordnung der Dehnungsmeßstreifen auf den Parallelogrammfedern und ihre Anordnung in der Meßschaltung kann in vorteilhafter Weise gemäß den in den Unteransprüchen 2 und 3 angegebenen Ausbildungen erfolgen.

Die Erfindung wird anhand der Figuren erläutert, wobei

Figur 1 eine Prinzipdarstellung einer Meßfeder mit Parallelogrammfederteilen,

Figur 2 eine Ansicht des Ausführungsbeispiels der erfindungsgemäßen Meßanordnung,

Figur 3 eine weitere Ansicht des Ausführungsbeispiels und

Figur 4 eine Meßschaltung zur Auswertung der erfaßten Meßsignale zeigen.

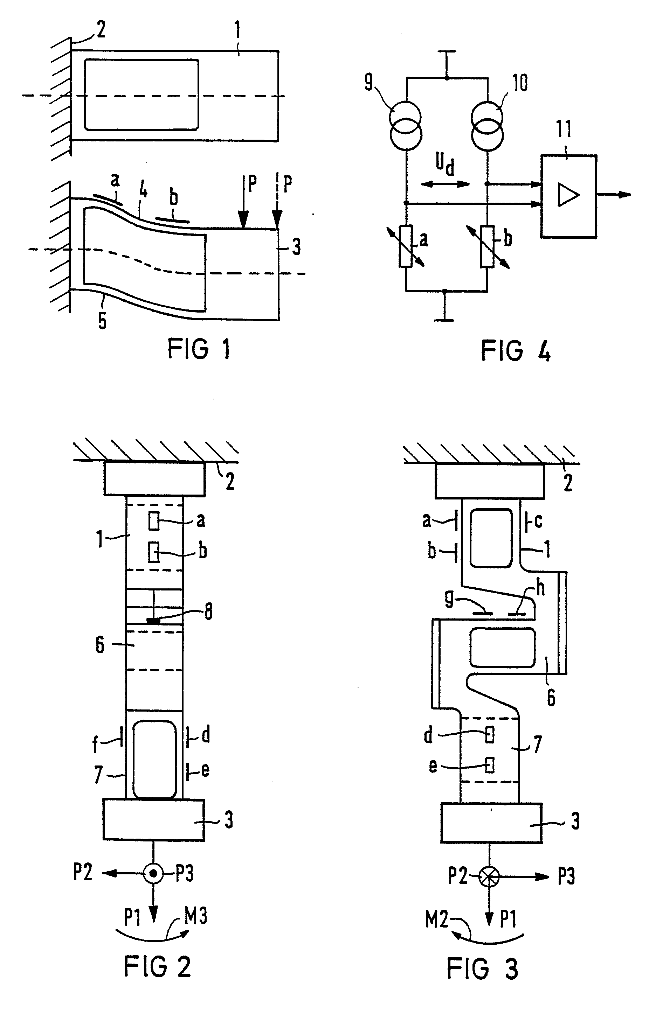

Die Meßanordnung nach der Figur 1 weist einen quaderförmigen Block 1 auf, der an einem Ende 2 gehalten ist und an dessen anderem Ende 3 eine Kraft P einwirkt, die die als Parallelogrammfedern wirkenden Seitenteile 4 und 5 zur Durchbiegung bringt. Auf der Oberfläche des Seitenteils 4 sind Dehnungsmeßstreifen a und b angeordnet.

Bei der Darstellung des Ausführungsbeispiels nach der Figur 2 ist eine Reihenanordnung aus Blöcken 1, 6 und 7 gezeigt, die an dem einen Ende 2 festgehalten ist und an deren anderem Ende 3 Kräfte P1, P2, P3 sowie das Drehmoment M3 angreifen. Die Anordnung von Dehnungsmeßstreifen a, b, c, d, e, f wird im Zusammenhang mit der Figur 3 beschrieben.

In der Figur 3 ist eine um 90° gedrehte Ansicht desselben Ausführungsbeispiels gezeigt, wobei hier noch das Drehmoment M2 darstellbar ist. Auf den Parallelogrammfederteilen des Blockes 1 sind die Dehnungsmeßstreifen a, b und c angebracht. Auf dem Block 6 sind Dehnungsmeßstreifen g und h und auf dem Block 7 sind die auch schon aus der Figur 2 ersichtlichen Dehnungsmeßstreifen d, e und f angebracht.

Aus der folgenden qualitativen Belastungsmatrix der Dehnungsmeßstreifen a bis h ist erkennbar, welche Kräfte und Momente auf welche Dehnungsmeßstreifen einwirken, wobei "+" für Dehnung, "-" für Stauchung und "0" für keine Beeinflussung steht.

| DMS Nr. | a | b | c | d | e | f | g | h |
|---------|---|---|---|---|---|---|---|---|
| P1 | 0 | 0 | 0 | 0 | 0 | 0 | – | + |
| P2 | 0 | 0 | 0 | + | – | – | 0 | 0 |
| P3 | + | – | – | 0 | 0 | 0 | 0 | 0 |
| M2 | – | – | + | 0 | 0 | 0 | 0 | 0 |
| M3 | 0 | 0 | 0 | – | – | + | 0 | 0 |

In der Meßschaltung nach Figur 4 sind jeweils zwei zusammengehörige Dehnungsmeßstreifen, beispielsweise die Dehnungsmeßstreifen a und b, Teile einer Brückenschaltung, die jeweils in ihrem Brückenzweig noch Stromquellen 9 und 10 aufweisen. Eine Diagonalspannung $U_d$ wird über einen Meßverstärker 11 erfaßt und steht zur weiteren Auswertung zur Verfügung. In dieser Brückenschaltung werden somit die Dehnungsmeßstreifen jeweils paarweise abgetastet, wobei es zu den folgenden, den Kräften und Momenten entsprechenden Meßsignalen kommt.

$$h - g \; \hat{=} \; P1$$
$$d - e \; \hat{=} \; P2$$
$$a - b \; \hat{=} \; P3$$
$$\overline{\phantom{------------}}$$
$$c - b \; \hat{=} \; M2$$
$$f - e \; \hat{=} \; M3$$

## Ansprüche

1. Meßanordnung zum Erfassen von Kräften und Momenten
-mit an Verformteilen einer Feder-/ bzw. Biegeanordnung angebrachten Dehnungsmeßstreifen (a, b, c, d, e, f, g, h) die bei einer Beaufschlagung der Verformteile mit Kräften (P1, P2, P3) oder Momenten (M2, M3) eine Dehnung oder Stauchung erfahren,
-und einer Auswerteschaltung (9, 10, 11) in der die Dehnungsmeßstreifen (a ... h) Elemente einer Brückenschaltung sind,
**dadurch gekennzeichnet,**
- daß eine Reihenanordnung von quaderförmigen Blöcken (1, 6, 7) vorhanden ist, die eine derartige Ausnehmung aufweisen, daß zwei sich gegenüberliegende Seitenteile (4, 5) der Blöcke (1, 6, 7) die Verformteile darstellen und als Parallelogrammfedern wirken, auf denen die Dehnungsmeßstreifen (a ... h) angebracht sind,
-daß die Reihenanordnung an einem Ende (2) festgehalten ist und am anderen Ende (3) die Kräfte (P1, P2, P3) und Momente (M1, M2) aufnimmt,
-daß ein erster (1) und ein zweiter Block (7) vorhanden ist, deren Parallelogrammfedern sich in Richtung der Achse (Kraft P1) der Reihenanordnung erstrecken, wobei deren Oberflächen untereinander um 90° versetzt ausgerichtet sind,
-und daß ein dritter Block (6) vorhanden ist, dessen Parallelogrammfedern sich senkrecht zur Achse der Reihenanordnung erstrecken, wobei deren Oberflächen 90° versetzt zum ersten (1) und zum zweiten Block (7) ausgerichtet sind.
2. Meßanordnung nach Anspruch 1, **dadurch gekennzeichnet,**
-daß auf einer der Parallelogrammfedern des ersten Blocks (1) und des zweiten Blocks (7) zwei Dehnungsmeßstreifen (a, b; d, e) in Richtung der Achse untereinander angeordnet sind zur Erfassung einer senkrecht zur Oberfläche des ersten Blocks (1) verlaufenden Kraft (P3) und zur Messung einer zur Oberfläche des zweiten Blocks (7) verlaufenden Kraft (P2),
-daß auf einer der Parallelogrammfedern des dritten Blocks (6) zwei Dehnungsmeßstreifen (g, h) in Richtung quer zur Achse nebeneinander angeordnet sind zur Erfassung einer senkrecht zur Oberfläche des dritten Blocks (6) verlaufenden Kraft (P1)

-und daß auf den noch freien Parallelogrammfedern des ersten (1) und zweiten Blocks (7) jeweils ein Dehnungsmeßstreifen (c; f) angebracht ist zur Erfassung von auf das andere Ende (3) der Reihenanordnung wirkenden Drehmomenten (M2, M3) mit dem ersten festgehaltenen Ende (2) als Drehpunkt.

3. Meßanordnung nach Anspruch 1 oder 2, **dadurch gekennzeichnet,**

-daß jeweils die paarweise auf einer der Parallelogrammfedern der Blöcke (1, 6, 7) angeordneten Dehnungsmeßstreifen (a, b; d, e; g, h) Teile einer Halbbrücke in der Brückenschaltung zur Auswertung der Meßsignale sind

-und daß die einzeln auf dem ersten und zweiten Block angeordneten Dehnungsmeßstreifen (c; f) ebenfalls als Dehnungsmeßstreifen-Paar Teile einer Halbbrücke sind.

FIG 1

FIG 4

$U_d$

FIG 2

P2 ← ⊙ → P3

P1 ↓   M3

FIG 3

P2 ← ⊗ → P3

M2   ↓ P1

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int. Cl.3) |
|---|---|---|---|
| D,A | DE-A-3 406 059 (SIEMENS AG) <br> * Zusammenfassung; Figur 3 * <br> --- | 1 | G 01 L 1/22 <br> G 01 L 3/14 <br> G 01 L 5/16 |
| X | EP-A-0 139 307 (Y. HATAMURA) <br> * Figuren 6-8; Seiten 27-32 * <br> --- | 1 | |
| X | PATENT ABSTRACTS OF JAPAN, Band 9, Nr. 72 (P-345)[1795], 2. April 1985; & JP - A - 59 204 732 (TOKYO DENKI) 20.11.1984 <br> --- | 1 | |
| A | US-A-4 520 679 (Y. HATAMURA) <br> * Figur 1A; Spalte 3, Zeilen 11-35 * <br> ----- | 1 | |

| | RECHERCHIERTE SACHGEBIETE (Int. Cl.3) |
|---|---|
| | G 01 L 1/22 <br> G 01 L 3/14 <br> G 01 L 5/16 |

Der vorliegende Recherchenbericht wurde für alle Patentansprüche erstellt

| Recherchenort | Abschlußdatum der Recherche | Prüfer |
|---|---|---|
| BERLIN | 13-11-1987 | KOEHN G |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angefzhrtes Dokument

........................................................................
& : Mitglied der gleichen Patentfamilie, übereinstimmendes Dokument

EPO FORM 1503 03.82 (P0403)